# EUROPÄISCHE PATENTANMELDUNG

(11) **EP 2 500 476 A1**
(43) Veröffentlichungstag der Anmeldung: **19.09.2012**
(21) Anmeldenummer: 11002219.1
(22) Anmeldetag: 17.03.2011
(51) Int. Cl.: E03F 5/16

(54) **Abscheider mit auswechselbarem Tank**

(71) Anmelder: Kessel AG, 85101 Lenting (DE)
(72) Erfinder: Kessel, Bernhard, 85101 Lenting (DE)
(74) Vertreter: Grünecker, Kinkeldey, Stockmair & Schwanhäusser

(57) **Zusammenfassung**

In einem Abscheide-System (S) zur Abscheidung und Entsorgung von Öl und/oder Fett, das mit Abwasser anfällt, ist ein eine obenliegende Öffnung mit einem Öffnungsrand (R) aufweisender Wechselbehälter (B) mit einem abnehmbaren Deckel (D) verschlossen, der mit dem Wechselbehälter (B) eine Abscheidefunktion leistet und hierfür einen zum Wechselbehälter-Öffnungsrand (R) passenden Abdichtrand (5) und innerhalb des Abdichtrandes (5) an einer Verrohrung (25) einen Zulauf (Z) und einen Ablauf (A) aufweist, die an der Oberseite des Deckels (D) zugänglich angeordnet sind, und von denen sich Zulauf- und Ablaufrohre (6, 8) durch den Deckel (D) hindurch erstrecken, deren Zulauf- und Ablauf-Mündungen (7, 9) von der Unterseite des Deckels (D) unterschiedlich weit beabstandet sind.

## Beschreibung

Die Erfindung betrifft ein Abscheide-System gemäß Oberbegriff des Patentanspruchs 1.

Insbesondere in Drittländern, in denen nicht so strenge Vorschriften an Fett- und Ölabscheider herrschen, wie in Deutschland (nach Anforderung des Deutschen Instituts für Bautechnik, Berlin, ist das Fett oder Öl täglich abzuschöpfen; nach Beendigung eines Einsatzes, mindestens einmal pro Woche, ist ein Fettabscheider vollständig zu leeren und zu reinigen), existiert erheblicher Bedarf nach einem einfachen und sehr kostengünstigen Abscheide-System, das es beispielsweise Betreibern von Haushalten, Verkaufskiosken für frittierte Waren, Kleinrestaurants, Verkaufsbuden für Lebensmittel, Straßengeschäften, und dgl. ermöglicht, anfallendes Fett oder Öl, insbesondere mit Abwasser, aufzufangen, Fett oder Öl abzuscheiden, und vor allem Fett oder Öl oder fett- oder ölhaltige Reste zu sammeln und einfach zu entsorgen. Da speziell in solchen Drittländern der Kostenfaktor von hoher Bedeutung ist, wird eine extrem kostengünstige und bequem auch von Laien zu handhabende Ausstattung für solche Zwecke benötigt, die dem Umweltschutz dienlich ist und gegebenenfalls die Vergeudung des in solchen Abfällen enthaltenden Wertes oder der darin enthaltenen potentiellen Energie nutzen lässt.

Vorwiegend für gewerbliche Zwecke benutzte, bekannte Fett- oder Ölabscheider sind relativ teure Geräte und für solche einfachen Anforderungen überqualifiziert, und somit für Kleinabscheidezwecke ungeeignet.

In Bayern und Österreich gibt es eine ARGE "Energie und Treibstoff aus Fett", die Haushalte mit sogenannten ÖLI-Ölsammelbehältern versorgt, d.h., einfachen gelben Kunststoffeimern mit Henkel und Stülpdeckel. Der Nutzer füllt altes Kochfett oder -öl über einen Schlauch oder mit einem anderen Behälter in den ÖLI-Ölsammelbehälter, verschließt diesen, und bringt ihn zu einer Sammelbox in einem Recyclinghof. Dann erfolgt eine zentrale Aufbereitung und Verwertung, beispielsweise durch Verbrennen zur Stromerzeugung oder um Treibstoff zu produzieren und den Restwert bzw. die potentielle Energie in diesen Abfällen zu nutzen. Dieses Abscheide-System ist nicht für den gewerblichen Bereich geeignet, erfordert jedoch die gezielte Absonderung und Handhabung der Fette und Öle durch den Nutzer und eine entsprechende Infrastruktur zur Verwertung und Entsorgung, allerdings nicht für fett- und/oder ölhaltiges Abwasser. Zum Zwecke des Ressourcenschutzes wird aus dem Abfallprodukt Altspeisefett oder -öl das Recyclingprodukt Energie gewonnen. Dieses System ließe sich mitbenutzen, wenn ein einfaches Abscheide-System existierte, in welchem abgeschiedenes Öl oder Fett ohne vorherige Handhabung gleich zum Entsorgen oder Transport bereitsteht.

Es gibt mittlerweile ein zunehmendes Bestreben nach Schonung der Umwelt gegen sorglose Entsorgung von öl- und/oder fetthaltigem Abwasser und/oder nach Nutzung des Energiepotentials solcher Abfälle. Speziell in Drittländern, die auf die Umweltbelastung oder Vergeudung der potentiellen Energie in solchen Abfällen bisher kein Augenmerk richteten, wie z.B. in Indien, wo aus Gründen der lokalen Ess- und Kochkultur und hohen Bevölkerungsdichte durchaus nennenswerte Mengen an fett- und/oder ölhaltigem Abwasser anfallen, nimmt das Umweltbewusstsein zu und/oder wird von Behördenseite zunehmend daran appelliert. Jedoch setzen Armut, Unkenntnis und Tradition hierbei Grenzen, so dass ein sinnvollerer Umgang mit solchen Abfällen bisher kaum realisiert wird, aber bei Verfügbarkeit eines entsprechend einfach zu handhabenden und vor allem sehr kostengünstigen Abscheide-Systems erhebliche Chancen auf Akzeptanz hat.

Der Erfindung liegt die Aufgabe zugrunde, ein einfaches, universelles, bequem zu handhabendes und vor allem sehr kostengünstiges Abscheide-System anzugeben, dessen sich jedermann auch in Drittländern mit etwas gutem Willen zu bedienen vermag, und das bei der Verarbeitung z.B. von Lebensmitteln mit Abwasser anfallendes Fett und/oder Öl dieser wertvollen Abfallstoffe entledigen und diese wertvollen Abfallstoffe gezielt entsorgen lässt. Es soll in anderen Worten der auch in Drittländern durchaus verwendete Komposteimer als Abscheider fungieren, der fett- und/oder ölhaltige Bestandteile aus Abwasser abscheidet, sammelt und bequem entsorgen oder einer Weiterverwertung zuführen lässt.

Die gestellte Aufgabe wird mit den Merkmalen des Patentanspruchs 1 gelöst.

Nur der Deckel mit seiner speziellen, integrierten Verrohrung ist die Komponente, die ein Nutzer sich beschaffen muss, um aus mit Fett und/oder Öl befrachtetem Abwasser zumindest das Fett und/oder Öl dadurch abscheiden und sammeln zu können, dass er das befrachtete Abwasser durch den mit dem speziellen Deckel verschlossenen Wechselbehälter leitet. Als Wechselbehälter kann jeder Behälter verwendet werden, der einen entsprechenden und zum Deckel passenden Öffnungsrand besitzt, und groß genug ist, die überstehenden Zulauf- und Ablaufrohre aufnehmen zu können. Solche Wechselbehälter sind weltweit ohnedies in Gebrauch oder sehr kostengünstig verfügbar, können aber auch vom Hersteller oder Verkäufer des speziellen Deckels beschafft werden. Solche Wechselbehälter sind beispielsweise Weithalsfässer aus Kunststoff, die in unterschiedlichsten Größen weltweit verfügbar sind, und im Regelfall durch einen passenden Standard-Verschlussdeckel verschlossen werden, an dessen Stelle der speziell ausgebildete Deckel installiert wird, der mit dem Wechselbehälter die Abscheidefunktion leistet. Darunter ist zu verstehen, dass der Deckel aufgrund der Verrohrung befrachtetes Abwasser über den Zulauf in das Innere des zunächst dicht verschlossenen Wechselbehälters einleitet, das dort unter einer Strömungsberuhigung zirkuliert, wobei schwerere Bestandteile, falls vorhanden, zu Boden sinken, und leichtere Bestandteile wie Fett und/oder Öl oder dgl. aufsteigen und sich unterhalb des Deckels sammeln. Durch die unterschiedlichen Höhenlagen von Zu- und Ablauf und der Zulauf- und Ablauf-Mündungen wird eine räumliche Trennung zwischen den aufschwimmenden Leichtstoffen, den zu Boden sinkenden schwereren Bestandteilen, und einer Klarwasserschicht geschaffen, aus welcher Klarwasser über den Ablauf aus dem Abscheide-System austritt und entweder in einen Gully oder gleich in die Kanalisation geleitet wird. Der Zulauf kann an eine Abwasserableitung angeschlossen sein. Sobald in dem Abscheide-System so viel Öl und/oder Fett abgeschieden ist, dass das Abscheide-System nichts mehr aufzunehmen vermag, ist eine Entsorgung oder Weiterverwertung zumindest des abgeschiedenen Öls und/oder Fettes fällig. Der Nutzer hat den speziell ausgebildeten Deckel abzunehmen, den vollen Wechselbehälter durch einen Standard-Verschlussdeckel zu verschließen, und den Inhalt zu entsorgen oder der Weiterverwertung zuzuführen. Dann kann er entweder den geleerten Wechselbehälter wieder mit dem speziell ausgebildeten Deckel kombinieren, oder diesen Deckel gleich auf einem bereitgehaltenen leeren Wechselbehälter montieren. Dann ist sofort wieder die Abscheidefunktion nutzbar. Der Wechselbehälter leistet die Sammel- und Transportfunktion zur Entsorgung oder zum Zuführen zu einer Weiterverwertung. Der Deckel ist baulich einfach, kostengünstig herstellbar und leicht auch über große Distanzen zu transportieren, während in den meisten Fällen der Wechselbehälter ohnedies vor Ort verfügbar ist. Die Handhabung ist denkbar einfach und auch von Laien problemlos zu verstehen. Der Einsatz des Abscheide-Systems entlastet die Umwelt und ermöglicht es bequem, den Restwert oder die potentielle Energie des Öls und/oder Fettes zu nutzen, beispielsweise zur Herstellung von elektrischer Energie oder von Treibstoffen.

Bei einer zweckmäßigen Ausführungsform wird der Deckel mit der Verrohrung an dem Wechselbehälter anstelle eines Standard-Verschlussdeckels dicht angebracht. Der Standard-Verschlussdeckel ist zumeist Teil der vor Ort verfügbaren Wechselbehälter. Der lösbare Schließmechanismus, mit dem der Deckel mit der Verrohrung festgelegt wird, ist entweder der Schließmechanismus, der für den Standard-Verschlussdeckel ohnedies vorgesehen ist, oder ist diesem im Wesentlichen baugleich. So kann beispielsweise bei einem Weithalsfass der Spannring, der an sich für den Standard-Verschlussdeckel vorgesehen ist, in gleicher Weise zum Festlegen des Deckels mit der Verrohrung benutzt werden, oder kann im Falle eines Standard-Verschlussdeckels mit daran angeordneten Verschlussbügeln oder dgl. der Deckel mit der Verrohrung mit entsprechenden Verschlussbügeln versehen sein, die zum dann benutzten Wechselbehälter passen.

Bei einer zweckmäßigen Ausführungsform ist der Wechselbehälter ein Standard-Weithalsfass mit oder ohne Tragegriffen, vorzugsweise mit UN-Zulassung, oder ein Standardeimer mit Griffen oder einem Henkel, und zwar, vorzugsweise, aus einem Kunststoff, wie Polyethylen. Standard-Weithalsfässer sind in unterschiedlichen Größen weltweit für geringe Gestehungskosten verfügbar. Tragegriffe oder Tragemulden erleichtern den Transport des vollen Wechselbehälters bei der Entsorgung. In gleicher Weise kann ein Standardeimer mit Griffen oder einem Henkel als Wechselbehälter benutzt werden, der sich auch in vollem Zustand bequem transportieren lässt. Kunststoff als Material für den Wechselbehälter resultiert in geringem Gewicht, ist relativ resistent gegen Verschmutzungen, ist chemisch beständig oder zeigt nur gering Schmutzanhaftungs-Neigung, z. B. aufgrund inerter Oberflächen, und dgl., obwohl Wechselbehälter aus anderem Material, beispielsweise Blech oder sogar ein Fass aus Holz, ebenso nutzbar sind, um einerseits mit dem Deckel und der Verrohrung die Abscheidefunktion zu leisten, und andererseits ohne diesen Deckel und z. B. dem Standard-Verschlussdeckel die Transportfunktion zu ermöglichen.

Bei einer zweckmäßigen Ausführungsform hat der Wechselbehälter mit montiertem Deckel eine Höhe geringer als die Unterstellhöhe einer Küchenarbeitsplatte und/oder geringer als etwa 80 cm. Diese Größe ermöglicht beispielsweise das Unterbringen des Abscheide-Systems unter einer Arbeitsplatte oder einem Spülbecken, aus dem das befrachtete Abwasser stammt. Ferner hat eine Höhe von geringer als etwa 80 cm den Vorteil, dass ein Nutzer einen vollen Wechselbehälter problemlos allein zu handhaben vermag. Bei einer zweckmäßigen Ausführungsform ist der Deckel mit der Verrohrung ein Kunststoffformteil, das einstückig oder zusammengesetzt sein kann, und das oder dessen Komponente nach Tiefzieh-, Blasform-, Rotationsform- oder Spritzguss-Formverfahren aus Kunststoff hergestellt ist bzw. sind. Diese Formverfahren ermöglichen bei geringen Herstellungskosten hohe Formtreue und große Formvielfalt.

Bei einer zweckmäßigen Ausführungsform weist der Deckel oberhalb der Ebene des Abdichtrandes, zweckmäßig zwischen dem Zulauf und dem Ablauf, eine durchgängige Durchlüftung auf, die das Einfließen des befrachteten Abwassers in das Abscheide-System und das Abfließen des Klarwassers begünstigt.

Bei einer weiteren Ausführungsform kann es zweckmäßig sein, wenn der Deckel einen Handhabungsgriff aufweist, der beispielsweise zum Umsetzen des gefüllten Wechselbehälters nutzbar ist, oder zur Montage bzw. Abnahme des Deckels mit der Verrohrung im Falle eines Wechselbehälter-Wechsels. Besonders zweckmäßig erfüllt der Handhabungsgriff eine Doppelfunktion, wenn er auch eine durchgängige Durchlüftung vom Zulauf zum Ablauf bildet. Die Durchlüftung bietet nicht nur den Vorteil eines gleichmäßigen und hohen Durchsatzes durch das Abscheide-System, sondern ermöglicht auch, befrachtetes Abwasser direkt vom Zulauf in den Ablauf zu leiten, falls die Verrohrung verlegt und/oder der Wechselbehälter bereits voll sein sollte.

Bei einer besonders zweckmäßigen Ausführungsform weist der Deckel unterseitig ein gegenüber der Ebene des Abdichtrandes nach unten vorstehendes Verdrängerteil auf. Dieses Verdrängerteil beansprucht bei montiertem Deckel ein bestimmtes Volumen im Inneren des Wechselbehälters, das bei vollem Wechselbehälter den Abscheideinhalt verdrängt. Wird nun der Deckel für einen Wechsel des Wechselbehälters abgenommen, d.h. angehoben, dann gibt das Verdrängerteil im Wechselbehälter allmählich genügend Volumen frei, damit in der Verrohrung und/oder im Wechselbehälter vorhandenes Abwasser, Öl und/oder Fett nicht überlaufen, sondern im Wechselbehälter verbleiben. Das von dem Verdrängerteil beanspruchte Volumen wird zweckmäßig so gewählt, dass nach Entnahme des Deckels aus dem vollen Wechselbehälter dessen Abdicht- und Öffnungsrand frei bleibt, um den-Standard-Verschlussdeckel bequem aufbringen zu können.

Zweckmäßig wird die Verrohrung im Deckel innen in das Verdrängerteil des Deckels integriert, und, vorzugsweise, mit dem Verdrängerteil im Deckel fixiert. Die Verrohrung wird somit stabiler Teil des Deckels.

Bei einer zweckmäßigen Ausführungsform weist die Verrohrung zwei annähernd parallele Rohrstutzen auf, die an voneinander abgewandten Seiten an jeweils einem Rohrknie den Zulauf und den Ablauf sowie an der anderen Seite des Deckels die zweckmäßig seitlich platzierten Zulauf- und Ablauf-Mündungen, jeweils auf unterschiedlichen Höhen im Hinblick auf die gewünschte Abscheidefunktion, besitzen. Die beiden Rohrstutzen können aneinander über wenigstens eine Verstrebung fixiert sein und sind in dem beispielsweise becherförmig ausgebildeten Verdrängerteil über Dichtungen oder dichte Fixierungen festgelegt, beispielsweise in Öffnungen im Becherboden. Das becherförmige Verdrängerteil seinerseits ist über eine Dichtung oder eine dichte Fixierung, wie eine Verklebung oder eine Schweißnaht, mit seinem oberen Ende in einer Öffnung des Deckels festgelegt, vorzugsweise zentral. Falls eine durchgängige Durchlüftung vorgesehen ist, kann diese als Handhabungsgriff zwischen den beiden Rohrknie bügelförmig vorgesehen sein, um den Durchfluss zu begünstigen, griffgünstig platziert zu sein, und die Rohrstutzen zusätzlich aneinander abzustützen.

Bei einer weiteren Ausführungsform können an den Rohrstutzen und am Verdrängerteil jeweils außen Positionierungsanschläge vorgesehen sein, die eine bequeme Montage der Verrohrung und des Verdrängerteils im Deckel in der durch den Hersteller vorbestimmten Weise bzw. Relativpositionierung erleichtern bzw. vorgeben.

Anhand der Zeichnungen werden Ausführungsformen des Erfindungsgegenstandes erläutert. Es zeigen:
- Fig. 1: eine schematische Vertikalschnittdarstellung eines betriebsbereiten Abscheide-Systems,
- Fig. 2: einen Vertikalschnitt einer konkreten Ausführungsform eines Abscheide-Systems, analog zu Fig. 1,
- Fig. 3: eine Seitenansicht einer Verrohrung,
- Fig. 4: eine Seitenansicht eines becherförmigen Verdrängerteils,
- Fig. 5: eine Draufsicht auf den Verdrängerteil von Fig. 4,
- Fig. 6: die Verrohrung von Fig. 3 in montiertem Zustand im Verdrängerteil der Fig. 4 und 5, und
- Fig. 7: einen für das Abscheide-System brauchbaren beispielhaften Wechselbehälter mit einem Standard-Verschlussdeckel in einem Vertikalschnitt.

Kern der Erfindung ist ein einfach handhabbares kostengünstiges Abscheide-System S, d.h. ein sogenannter Kleinabscheider für die Küche eines Haushalts, einen Verkaufskiosk, ein kleines Restaurant, eine "Frittenbude", oder dgl., d.h., für einen Nutzer, der bei der Behandlung beispielsweise von Lebensmitteln mit Fett und/oder Öl befrachtetes Abwasser produziert. Das Abscheide-System S ist eine Maßnahme zum Ressourcenschutz, weil aus dem Abfallprodukt "Altspeisefett" oder "Altspeiseöl", mit oder ohne Abwasser, ein Recyclingprodukt in Form von Energie oder Treibstoff gewonnen und dabei die Umwelt entlastet werden kann. Es kann sozusagen ein Komposteimer oder Abfalleimer auf ganz einfache Weise durch einen Abscheider ersetzt werden. Der Nutzer wird der umständlichen und unhygienischen Entsorgung und Reinigung wie bei einem Fettabscheider herkömmlicher Bauweise enthoben, und kann das Abscheide-System S bequem und hygienisch nutzen. Der Abscheideinhalt wird dabei gar nicht mehr aus dem Wechselbehälter entnommen, sondern der Wechselbehälter wird mit Inhalt entsorgt oder der Wiederverwertung zugeführt und gegen einen leeren Wechselbehälter getauscht. In einem Rücknahmesystem lässt sich der Abscheideinhalt verwerten und der Wechselbehälter reinigen und zurückbringen. Dadurch werden beispielsweise für private Haushalte auch Fettanlagerungen in einer nachgeschalteten Abwasserleitung vermieden. Wichtig ist hierbei, dass jeder zu dem mit der Verrohrung ausgebildeten Deckel D passende Wechselbehälter B verwendet werden kann, der vor Ort verfügbar ist und eine innere Höhe bzw. ein Fassungsvermögen hat, mit dem sich eine zweckmäßige Abscheide- und Sammelfunktion bewerkstelligen lässt. Es braucht nur der Deckel mit der Verrohrung beschafft zu werden, der einfach herstellbar und auch über lange Wege kostengünstig transportierbar ist.

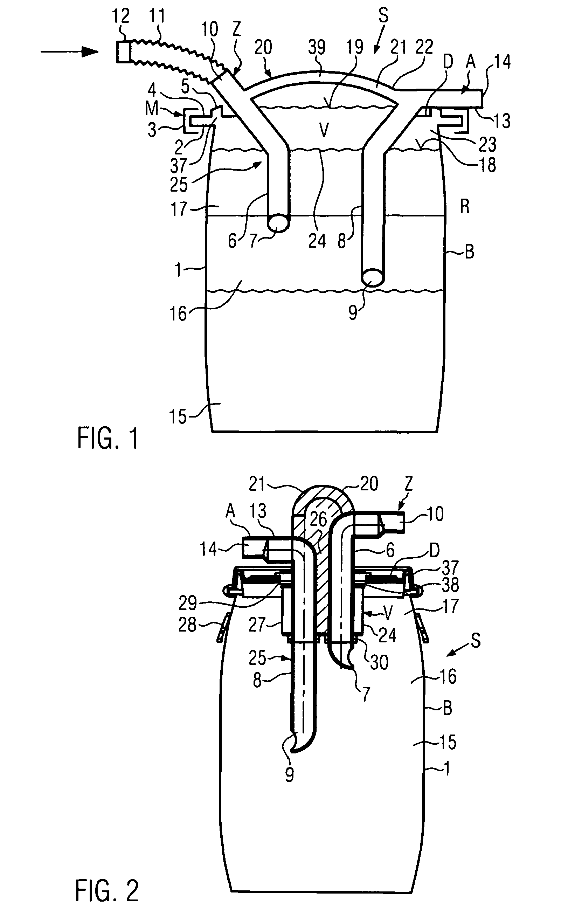

Das in Fig. 1 schematisch im Schnitt angedeutete Abscheide-System S lässt Öl und/oder Fett aus Abwasser oder direkt abscheiden, das beispielsweise bei der Handhabung von Lebensmitteln oder beim Kochen, mit oder ohne Abwasser, anfällt und nur durch das Abscheide-System S geleitet zu werden braucht, das entsprechend aufgestellt und angeschlossen wird.

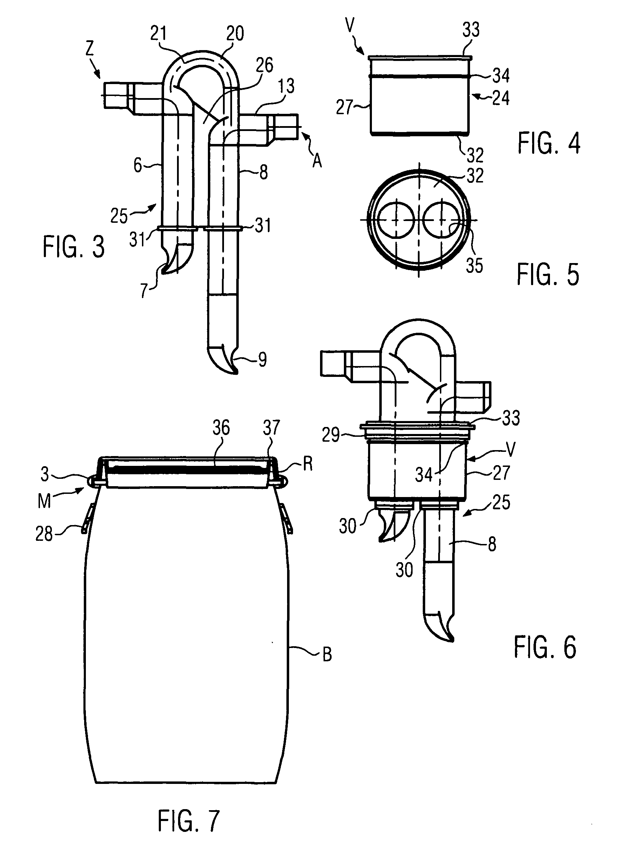

Kern des Abscheide-Systems S von Fig. 1 ist der mit einer Verrohrung 25 ausgebildete Deckel D. Der Wechselbehälter B kann jeder beliebige, z.B. standardisierte Sammelbehälter aus Kunststoff oder einem anderen Material sein, und weist einen oben offenen Grundkörper 1 mit einem umlaufenden Flansch und einem Öffnungsrand R auf, der runde oder beliebige Gestalt haben kann. Ferner ist ein lösbarer Schließmechanismus M vorgesehen, der in der gezeigten Ausführungsform in Fig. 1 einen Spannring 3 umfasst, der mit dem Flansch 2 des Wechselbehälters B und einem Spannring-Klemmflansch 4 um einen Abdichtrand 5 des Deckels D, gegebenenfalls unter Verwendung einer Dichtung 37, einen Dichtschluss zwischen dem Deckel D und dem Wechselbehälter B herstellt, dabei aber die jederzeitige Möglichkeit bietet, den Deckel D abzunehmen und an seiner Stelle einen Standard-Verschlussdeckel 36 (Fig. 6) anzubringen.

Dabei leistet der installierte Deckel im funktionellen Zusammenspiel mit dem Wechselbehälter B eine Abscheidefunktion, weil eingeleitetes befrachtetes Abwasser aus dem Zulauf im Wechselbehälter B zirkuliert, und unter dem Einfluss der Schwerkraft schwerere Bestandteile, falls vorhanden, zu Boden sinken (Schicht 15), leichtere Bestandteile als Wasser, hochsteigen und sich abscheiden, wie beispielsweise Öl und/oder Fett (Schicht 17), und dazwischen eine Schicht 16 Klarwasser verbleibt, aus der das Klarwasser über den Ablauf A in die Kanalisation oder nur abgeleitet wird. Befrachtetes Abwasser, das in das Abscheide-System S geleitet wird, tritt nach der Abscheidung als Klarwasser aus und wird dann z.B. in die Kanalisation oder allgemein abgelassen. Der Wechselbehälter B erfüllt hingegen eine Sammel- und Transportfunktion für den Abscheideinhalt, und kann dazu mit seinem Standard-Verschlussdeckel 36 verschlossen und bequem abtransportiert werden.

Die Verrohrung 25 weist einen Zulauf Z und wenigstens einen Ablauf A beispielsweise jeweils an einem Rohrknie 13 , mit Mündungen 10, 14 auf, wobei zwischen dem Zulauf Z und dem Ablauf A eine durchgängige bogenförmige Durchlüftung 20 vorgesehen sein kann, die beispielsweise gleichzeitig einen Handhabungsgriff 21 für den Deckel D oder das Abscheide-System S bildet. Die Mündung 10 des Zulaufs liegt höher oberhalb des Abdichtrandes 5 des Deckels D als die Mündung 14 des Ablaufs A. Vom Zulauf Z und vom Ablauf A erstreckt sich jeweils ein Rohrstutzen 6, 8 durch den Deckel nach unten bis über die Unterseite des Deckels hinaus, wobei untere Zulauf- und Ablauf-Mündungen 7, 9 der Rohrstutzen 6, 8 von der Unterseite des Deckels beabstandet sind und in unterschiedlichen Höhenlagen liegen, d.h., dass die Ablauf-Mündung 9 weiter von der Unterseite des Deckels D beabstandet ist, als die Zulauf-Mündung 7.

Bei vollem Wechselbehälter B liegt dann beispielsweise zwischen den Mündungen 7, 9 die Klanivasserschicht 16 vor, während die Öl- und/oder Fettschicht 17 oberhalb der Zulauf-Mündung 7 schwimmt und sich zunächst bis zu einem Niveau 18 erstreckt (Luftraum 23), dann allerdings im Betrieb des Abscheide-Systems S bis auf ein Niveau 19 hochsteigt, das sogar höher liegen kann, als der Abdichtrand 5 des Deckels D, solange dieser dicht montiert ist. Sollte die Verrohrung 25 nicht mehr durchgängig oder der Wechselbehälter B voll sein, strömt zugeführtes Abwasser direkt über die Durchlüftung 20 vom Zulauf Z in den Ablauf A.

In der Ausführungsform in Fig. 1 ist an die Mündung 10 des Zulaufs Z ein Verbindungsstück 11 angeschlossen, beispielsweise ein flexibler Schlauch, der, vorzugsweise, an seinem Ende bei 12 passend zu einem Spülbeckenauslauf und gegebenenfalls als lösbarer Schnellverschluss gestaltet sein kann. Alternativ kann das Verbindungsstück mit einem Schnellverschluss an die Mündung 10 angeschlossen sein. Die Mündung 14 des Ablaufs A kann an einem Anschluss beispielsweise passend zu einem Spülbecken-Fallrohrstrang (nicht gezeigt) oder zur Kanalisation angeschlossen sein. Auch hier könnte man sich ein Verbindungsstück 11 vorstellen.

In der Ausführungsform in Fig. 1 ist der Deckel D mit wenigstens einem Verdrängerteil 24 ausgebildet, das massiv oder hohl sein kann, und in das die Verrohrung 25 integriert ist. Das Verdrängerteil 24 tritt gegenüber der Ebene des Abdichtrandes 5 nach unten über die Unterseite des Deckels D vor und beansprucht bei korrekt montiertem Deckel D im Inneren des vollen Wechselbehälters B ein vorbestimmtes Volumen, das beispielsweise ausreicht, beim Hochheben des Deckels D Abwasser nachlaufen und die Fett- oder Ölschicht 17 so weit absinken zu lassen, dass nichts nach außen über den Öffnungsrand R austritt, sondern schließlich das obere Niveau geringfügig unterhalb des Öffnungsrandes R steht, ehe der Standard-Verschlussdeckel 36 (Fig. 6) angebracht wird.

In Fig. 1 kann der Spiegel bis zum angedeuteten Niveau 19 steigen, das beispielsweise durch die Unterkante der Mündung 14 des Ablaufs A definiert ist. Kann anfallendes Abwasser nicht rasch genug durch das Abscheide-System S strömen, nimmt es gegebenenfalls vorübergehend den Umweg über die Durchlüftung 21 direkt zum Ablauf A, so dass dann ein Niveau '39 vorliegen kann. Beispielsweise dann, wenn die Schicht 17 des Fettes und/oder Öls so dick ist, dass sie die Zulaufmündung 7 erreicht, ist eine Entsorgung empfehlenswert.

In Fig. 1 ist der Deckel D mit wenigstens einem Verdrängerteil 24 ausgebildet, das massiv oder hohl sein kann, und in das, vorzugsweise, die Verrohrung 25 eingegliedert ist. Das Verdrängerteil 24 tritt gegenüber der Ebene des Abdichtrandes und der Unterseite des Deckels D nach unten vor und beansprucht bei korrekt installiertem Deckel D im Inneren des Wechselbehälters B ein vorbestimmtes Volumen. Zweck dieses Verdrängerteils 24 ist es, bei Abnahme des Deckels D vor einer Entsorgung des Abscheideinhalts zu vermeiden, dass nachlaufendes Abwasser und/oder bis zum Niveau 19 reichendes Fett oder Öl überfließen. Beim Anheben des Deckels D wird nämlich das Volumen des Verdrängerteils 24 im Inhalt allmählich freigegeben, so dass nach Entnahme des Deckels D mit der Verrohrung 25 aus dem vollen **Wechselbehälter** B in diesem der Füllstand zweckmäßig etwas unterhalb des Öffnungsrandes R bleibt.

Die Ablaufmündung 9 liegt tiefer als die Zulaufmündung 7, wobei im Abstand zwischen den Mündungen 9, 7, beispielsweise bei vollem Wechselbehälter B, eine Schicht 16 Klarwasser steht, unterhalb derer feste Bestandteile, wie beispielsweise Schlamm in der Schicht 15 am Boden abgeschieden sind. Leichtere Bestandteile als Wasser, z.B. Öl und/oder Fett 17, sind hochgestiegen und reichen bis an die Unterseite des Deckels D, oder normalerweise bis zum Niveau 19 entsprechend der Mündung 14 des Ablaufs, oder bei starkem Abwasseranfall sogar bis zum Niveau 39, das durch die den Zulauf Z mit dem Ablauf A verbindende durchgängige Durchlüftung 20 definiert ist. Die Durchlüftung 20 ist zweckmäßig ein Handhabungsgriff 21 in Form eines gewölbten Bügels zum bequemen Handhaben des Deckels D. Alternativ könnte neben einer Durchlüftung 20 ein eigener Handhabungsgriff 21 (nicht gezeigt) am Deckel D vorgesehen sein.

Der Deckel D leistet im funktionellen Zusammenspiel mit dem jeweils verwendeten Wechselbehälter B eine Abscheidefunktion, und zwar dank der Gestaltung mit der Verrohrung 25, während der jeweilige Wechselbehälter in Kombination mit dem Deckel D eine Sammelfunktion, und nach Abnahme des Deckels D und Ersatz durch einen Standard-Verschlussdeckel 36 (Fig. 6) eine Transport- und/oder Entsorgungsfunktion hat, in dem er in vollem oder nahezu vollem Zustand entweder zu einer Entsorgungsstelle oder einer Weiterverwertungsstelle transportiert wird. Der Wechselbehälter B wird geleert und zweckmäßig gereinigt, ehe er gleich oder später zurück gebracht wird. Wird der Wechselbehälter B erst später zurückgebracht, so kann vor Ort mit dem Deckel D wieder ein leerer gleicher oder ähnlicher Wechselbehälter B kombiniert werden um das Abscheide-System S gleich wieder nutzen zu können. Die Art und das Material des Wechselbehälters B spielt hierbei keine Rolle, sofern nur sichergestellt ist, dass der Öffnungsrand R zum Deckel D passt. Um hier gegebenenfalls unterschiedlich große Öffnungsränder mit einem Typ eines Deckels D kombinieren zu können, wäre es denkbar, dass der Abdichtrand 5 des Deckels D so gestaltet wird, dass er zu unterschiedlich großen Öffnungsrändern R verschiedener Wechselbehälter B passt.

Fig. 2 zeigt eine konkrete Ausführungsform eines Deckels D in einem Vertikalschnitt. Der Deckel D ist hier mit einem Wechselbehälter B für den Abscheidebetrieb kombiniert, der als standardisiertes Weithalsfass, z.B. mit UN-Zulassung, beispielsweise aus Kunststoff, ausgebildet ist, und mit seinem Grundkörper 1 das Volumen zur Verfügung stellt, in dem bodenseitig gegebenenfalls feste Bestandteile wie Schlamm 15 gesammelt wird, oberhalb dessen eine Schicht 16 aus Klarwasser steht, auf der eine Schicht 17 Öl und/oder Fett schwimmt. Das Weithalsfass besitzt beispielsweise Tragegriffe 28 oder (nicht gezeigt) Griffmulden, so wie dies bei solchen standardisierten Wechselbehältern üblich ist. Der Wechselbehälter B könnte aber auch ein Eimer oder ein anderer Behälter sein, dessen Öffnungsrand zum Deckel D passt.

In der Ausführungsform in Fig. 2 weist die Verrohrung 25, die in das Verdrängerteil V, 24 eingegliedert ist, zwei im Wesentlichen zueinander parallele, den Deckel D in etwa vertikal durchdringende Rohrstutzen 6, 8 auf, an denen der Zulauf und der Ablauf Z, A durch Rohrknie 13 so gebildet ist, dass die oberen Mündungen 10, 14 im Wesentlichen horizontal orientiert sind, jedoch in unterschiedlichen Höhenlagen, wobei der Zulauf Z höher positioniert ist, als der Ablauf A. Die Rohrstutzen 6, 8 weisen unten beispielsweise seitliche Zulauf- und Ablauf-Mündungen 9, 7, z. B. nach Art von Schaufeln, auf, wobei die Zulauf-Mündung 7 im Abstand unterhalb der Unterseite des Deckels D positioniert ist, jedoch die Ablauf-Mündung 9 deutlich weiter unterhalb der Unterseite des Deckels D als die Zulauf-Mündung 7. Die beiden Rohrstutzen 6, 8 können z.B. über wenigstens eine Verstrebung 26 miteinander verbunden sein, und gegebenenfalls auch über den Handhabungsgriff 21, der nach Art eines Bügels die Rohrknie 13 verbindet und gleichzeitig die durchgängige Durchlüftung 20 vom Zulauf Z zum Ablauf A bildet. Die Rohrstutzen 6, 8 können beispielsweise einen Innendurchmesser von etwa 50 mm haben, während die Durchlüftung 21 einen kleineren Innendurchmesser von etwa 20 mm haben kann.

In der Ausführungsform in Fig. 2 ist das Verdrängerteil 24, V nach Art eines im Grundzug zylindrischen Bechers 27 ausgebildet, in welchem die Verrohrung 25 hier herausnehmbar montiert ist. Und zwar sind die beiden Rohrstutzen 6, 8 mit Dichtungen 30 im Boden des Verdrängerteils 24 abgedichtet eingesteckt, und ist das Verdrängerteil 24 mit einer Dichtung 29 in eine hier zentralen Öffnung 38 des Deckels D eingesteckt und verrastet.

Der Deckel D in Fig. 2 ist als Stülpdeckel ausgebildet, der auf und über den Öffnungsrand R des Weithalsfasses passt und durch beispielsweise den Spannring 3 (Fig. 1) dicht festgelegt ist. Der Deckel D könnte alternativ oder additiv auch mehrere Spannbügel aufweisen, die seine Fixierung am Wechselbehälter B ermöglichen. Der Spannring 3 (Fig. 1) ist ein Schließmechanismus M, mit dem nicht nur der Deckel D, sondern beispielsweise auch der Standard-Verschlussdeckel 36 (Fig. 7) festgelegt werden kann.

Die Fig. 3, 4 und 5 verdeutlichen die einzelnen Komponenten, die in den Deckel D in Fig. 2 eingebaut werden, und zwar gemäß Fig. 2 mit den Dichtungen 29, 30, so dass der Deckel zerlegbar ist. Alternativ (nicht gezeigt) könnten die Komponenten der Fig. 3, 4 und 5 auch fest miteinander verbunden werden, z.B. verklebt oder verschweißt oder einstückig produziert sein.

Die Verrohrung 25 in Fig. 3 verdeutlicht zusätzlich zu den beiden Rohrstutzen 6, 8, die über die Verstrebung 26 und den Handhabungsgriff 20 miteinander verbunden sind, dass oberhalb der Zulauf- und Ablauf-Mündungen 7, 9 an den Rohrstutzen 6, 8 Positionieranschläge 31 angeformt sind, beispielsweise Ringflansche, die in Fig. 2 dazu dienen, die Einstecktiefe der Verrohrung 25 in das Verdrängerteil 24 zu begrenzen, indem diese Positionieranschläge 31 dann auf den Oberseiten der eingeknüpften Dichtungen 30 aufstehen.

Die Fig. 4 und 5 zeigen das Verdrängerteil 24 mit der Form eines weitgehend zylindrischen Bechers 27, der oben offen ist, und in seinem Becherboden 32 (Fig. 5) zwei Öffnungen 35 zum Einstecken der Rohrstutzen 8, 6 von Fig. 3 aufweist. In Fig. 4 sind Positionieranschläge 33, 34 außenseitig am Verdrängerteil 24 angeformt, wobei der Positionieranschlag 33 beispielsweise ein oberer Randflansch des Bechers 27 ist, mit welchem dieser nach dem Einstecken in die Öffnung 38 und die Dichtung 29 auf der Dichtung 29 aufsitzt. Der Positionieranschlag 34 ist beispielsweise ein Ringflansch, der in Fig. 2 unterhalb der Dichtung 29 liegt, und verhindert, dass der Becher 27 nach oben aus der Öffnung 38 herausgedrückt werden kann.

In Fig. 6 sind diese beiden Komponenten in einer Seitenansicht jedoch gezeigt, wobei die Dichtungen 29 und 30 schon eingesetzt, das Zwischenprodukt jedoch noch nicht in den Deckel D gemäß Fig. 2 eingesetzt ist. Der Positionieranschlag 33 liegt auf der oberen Seite der beispielsweise im Querschnitt L-förmigen Dichtung 29 auf. Der Positionieranschlag verhindert, dass der Becher 27 nach oben aus der Öffnung 38 des Deckels D herausgedrückt wird. Die Dichtungen 30, in die die Rohrstutzen 6, 8 eingesteckt sind, stehen unten aus dem Becher 27 vor, der bereit ist zum Einsetzen in die Öffnungen 35 im Becherboden 32 des Verdrängerteils 24.

Fig. 7 zeigt beispielsweise den Wechselbehälter B von Fig. 2, fertig zum Entsorgen mit seinem nicht näher vorgehobenen Inhalt, wobei der Wechselbehälter B mit seinem Standard-Verschlussdeckel 36 verschlossen ist, festgelegt durch den Spannring 3, der in Fig. 1 angedeutet ist, und abgedichtet durch die Dichtung 37, die über den Spannring 3 in einen Dichtschluss gezwungen ist.

## Patentansprüche

1. Abscheide-System (S), insbesondere zur Abscheidung und Entsorgung von mit Abwasser anfallendem Öl und/oder Fett, **dadurch gekennzeichnet, dass** ein eine obenliegende Öffnung mit einem Öffnungsrand (R) aufweisender Wechselbehälter (B) mit einem abnehmbaren Deckel (D) verschlossen ist, der einen zum Wechselbehälter-Öffnungsrand (R) passenden Abdichtrand (5) besitzt und innerhalb des Abdichtrandes (5) an einer eingegliederten Verrohrung (25) einen Zulauf (Z) und einen Ablauf (A) aufweist, die von der Oberseite des Deckels (D) zugänglich angeordnet sind, und von denen sich Zulauf- und Ablaufrohre (8, 6) durch den Deckel (D) hindurch erstrecken, deren Mündungen (9, 7) unterschiedlich weit von der Unterseite des Deckels (D) beabstandet sind, wobei der Deckel (D) im Zusammenspiel mit dem Wechselbehälter (B) eine Abscheidefunktion, und der Wechselbehälter (B) zur Entsorgung zumindest aus dem Abwasser abgeschiedenen Öls und/oder Fetts (17) eine Sammel- und Transportfunktion leisten.

2. Abscheide-System nach Anspruch 1, **dadurch gekennzeichnet, dass** der Deckel (D) an dem Wechselbehälter (B) anstelle eines Standard-Verschlussdeckels (36) mit einem lösbaren Schließmechanismus (M) dicht angebracht ist, und dass, vorzugsweise, der Schließmechanismus (M) entweder der Schließmechanismus (M) für den Standard-Verschlussdeckel (36) oder diesem im Wesentlichen baugleich ist.

3. Abscheide-System nach Anspruch 1, **dadurch gekennzeichnet, dass** der Wechselbehälter (B) ein Standard-Weithalsfass mit oder ohne Tragegriffen (28), vorzugsweise mit UN-Zulassung, oder ein Standardeimer mit Griffen oder einem Henkel, vorzugsweise aus einem Kunststoff, wie Polyethylen, ist.

4. Abscheide-System nach Anspruch 1, **dadurch gekennzeichnet, dass** der Wechselbehälter (B) mit montiertem Deckel (D) eine Höhe (H) geringer als die Unterstellhöhe einer Küchenarbeitsplatte und/oder geringer als etwa 80 cm hat.

5. Abscheide-System nach Anspruch 1, **dadurch gekennzeichnet, dass** der Deckel (D) ein, vorzugsweise einstückiger oder zusammengesetzter, Kunststoffformteil ist, vorzugsweise einen Tiefzieh-, Blasform-, Rotationsform- oder Spritzguss-Formteil umfasst.

6. Abscheide-System nach Anspruch 1, **dadurch gekennzeichnet, dass** der Deckel (D) oberhalb der Ebene des Abdichtrandes (5) zwischen dem Zulauf (Z) und dem Ablauf (A) eine durchgängige Durchlüftung (20) aufweist.

7. Abscheide-System nach Anspruch 1, **dadurch gekennzeichnet, dass** der Deckel (D) einen Handhabungs-Griff (22) aufweist, der, vorzugsweise, gleichzeitig eine durchgängige Durchlüftung (20) vom Zulauf (Z) zum Ablauf (A) bildet.

8. Abscheide-System nach Anspruch 1, **dadurch gekennzeichnet, dass** der Deckel (D) unterseitig ein gegenüber der Ebene des Abdichtrandes (5) nach unten vorstehendes Verdrängerteil (24, V) aufweist.

9. Abscheide-System nach Anspruch 8, **dadurch gekennzeichnet, dass** die Verrohrung (25) innen in das Verdrängerteil (24, V) integriert und mit dem Verdrängerteil (24) im Deckel (D) fixiert ist.

10. Abscheide-System nach wenigstens einem der vorhergehenden Ansprüche, **dadurch gekennzeichnet, dass** die Verrohrung (25) zwei annähernd parallele Rohrstutzen (8, 6) aufweist, die an voneinander abgewandten Seiten an jeweils einem Rohrknie (13) den Zulauf (Z) und den Ablauf (A) sowie seitlich platzierte Zulauf- und Ablauf-Mündungen (9, 7) jeweils auf unterschiedlichen Höhen aufweist, dass die beiden Rohrstutzen (6, 8) aneinander über wenigstens eine Verstrebung (26) fixiert und in dem becherförmig ausgebildeten Verdrängerteil (V, 24) über Dichtungen (29, 30) oder dichte Fixierungen zumindest im Becherboden (32) festgelegt sind, und dass der becherförmige Verdrängerteil (24, V) über eine Dichtung (29) oder eine dichte Fixierung mit seinem oberen Ende in einer, vorzugsweise zentralen, Öffnung (38) des Deckels (D) festgelegt ist, wobei, vorzugsweise, der als durchgängige Durchlüftung (21) ausgebildete Handhabungsgriff (20) die beiden Rohrknie (13) bügelförmig verbindet.

11. Abscheide-System nach Anspruch 10, **dadurch gekennzeichnet, dass** an den Rohrstutzen (6, 8) und am Verdrängerteil (V, 24) jeweils außen Positionierungsanschläge (33, 34, 31) vorgesehen sind.
